# EUROPÄISCHE PATENTSCHRIFT

(11) **EP 1 476 713 B1**
(45) Veröffentlichungstag und Bekanntmachung des Hinweises auf die Patenterteilung: **02.06.2010**
(21) Anmeldenummer: 03742524.6
(22) Anmeldetag: 15.02.2003
(51) Int. Cl.: F42C 1/00, F42C 13/02

(54) **ANNÄHERUNGSSENSOR, INSBESONDERE FÜR DIE ZÜNDAUSLÖSUNG DES GEFECHTSKOPFES EINER ABWEHRGRANATE GEGEN EIN ANFLIEGENDES PROJEKTIL**
PROXIMITY SENSOR, ESPECIALLY FOR IGNITION OF THE WARHEAD OF A SHELL DIRECTED AGAINST AN APPROACHING MISSILE
DETECTEUR DE PROXIMITE, EN PARTICULIER POUR LA MISE A FEU DE LA TETE EXPLOSIVE D'UN ANTI-MISSILE DIRIGE CONTRE UN MISSILE D'APPROCHE

(30) Priorität: 23.02.2002 DE 10207923
(43) Veröffentlichungstag der Anmeldung: 17.11.2004
(73) Patentinhaber: Diehl BGT Defence GmbH & Co.KG, 88662 Überlingen (DE)
(72) Erfinder: STEUER, Raimar, 91227 Leinburg (DE); WARM, Berndt, 90571 Schwaig (DE)
(74) Vertreter: Diehl Patentabteilung
(86) Internationale Anmeldenummer: PCT/EP2003/001528
(87) Internationale Veröffentlichungsnummer: WO 2003/071221

(56) Entgegenhaltungen:
- WO-A-02/07228
- DE-A- 3 729 411
- US-A- 3 628 018
- US-A- 4 245 558
- US-A- 4 809 611
- US-A- 5 456 179

## Beschreibung

Die Erfindung betrifft einen Annäherungssensor gemäß dem Oberbegriff des Anspruches 1. Ein solcher Annäherungssensor ist aus der US-A-5,456,179 bekannt.

Ein solcher Annäherungssensor wird für ein aktives Abwehrsystem benötigt, bei dem vom angegriffenen Objekt her dem angreifenden Projektil gemäß US 5,661,254 A eine Abwehrgranate mit Splittergefechtskopf oder gemäß US 6,244,156 B1 eine Abwehrgranate mit Blast-Gefechtskopf entgegengeschossen wird. Bei dem Angreifer kann es sich um ein antriebslos verschossenes Projektil (Geschoß) oder um ein mit Eigenantrieb ausgestattetes Projektil (Flugkörper) handeln. Die Abwehr erfolgt durch Beschädigung bzw. Auslösung der Zündsensorik des Angreifers oder durch Einflussnahme auf seine Angriffsbahn. Ein solches Szenario ist für einen Beispielsfall in der DE 196 01 756 C1 skizziert. Wie dort gezeigt ist realistischerweise nicht davon auszugehen, dass es zu einer Kollision zwischen dem Angreifer und der Abwehrgranate kommt. Deshalb muss der Gefechtskopf der Abwehrgranate unmittelbar vor dem Vorbeiflug gezündet werden, weil sich dann für dessen Splitter- oder Blast-Wirkung gerade die optimale Begegnungssituation relativ zum Angreifer eingestellt hat.

Für die Abstandsauslösung gegen Luftziele sind Radarzünder im Einsatz. Deren keulenförmige Empfindlichkeitscharakteristik führt aber in der dargestellten Passagesituation nicht zu einer eindeutigen und reproduzierbaren Zündinformation. Vor allem ist nachteilig bei Radarzündern, dass diese auch und sogar bevorzugt in Richtung koaxial voraus zu Zielkontakt führen, und damit in einer Annäherungssituation, die hinsichtlich des Abstandes und für die radial orientierte Wirkung des Abwehrgefechtskopfes extrem ungünstig ist.

In Erkenntnis dieser Gegebenheiten liegt vorliegender Erfindung die Aufgabe zugrunde, einen Annäherungssensor für die wirkoptimierte Auslösung des Gefechtskopfes einer Abwehrgranate anzugeben.

Diese Aufgabe ist erfindungsgemäß durch die im Patentanspruch 1 angegebenen wesentlichen Merkmale gelöst. Danach beschreibt die Empfangscharakteristik des erfindungsgemäßen Annäherungssensors die Wandung eines zur Systemachse der Abwehrgranate koaxialen Hohlkegels, der sich in Flugrichtung voraus, auf den anfliegenden Angreifer zu, öffnet. Der Annäherungssensor spricht an, führt also zur Initiierung des Abwehrgefechtskopfes, wenn der abzuwehrende Angreifer die Hohlkegelwandung passiert. Aufgrund der Kegelgeometrie liegt dieses Ereignis desto weiter vor der Abwehrgranate, je größer der radiale Abstand von der Systemachse und damit von der Flugbahn der Abwehrgranate ist. Dadurch hat die Gefechtskopfwirkung (ein ringsum radial abgehender Splitterkegel, bzw. eine entsprechende Druckwelle) desto länger Zeit, sich u. a. in Richtung auf den anfliegenden Angreifer auszubreiten, je weiter der bei Zündauslösung noch entfernt ist. Eine etwa koaxiale Annäherungssituation dagegen wird vom Sensor nicht erfasst, weil die sich im unempfindlichen Hohlkegel-Inneren abspielt. So lange der abzuwehrende Gegner im Hohlkegel-Inneren der Sensorcharakteristik anfliegt, spricht der Sensor also wunschgemäß noch nicht an, weil die Wirkung des Abwehrgefechtskopfes nicht axial voraus orientiert ist, sondern radial bezüglich der Abwehrflugbahn; weshalb mit der Zündauslösung bis zum anstehenden seitlichen Vorbeiflug gewartet wird.

Vorzugsweise wird der Annäherungssensor optoelektronisch im Infrarotbereich, zum Erfassen aufgeheizter Spitzen und Kanten des Angreifers, betrieben; nämlich mittels eines Zylinders aus thermooptisch leitendem Material, dessen einander gegenüberliegenden Stirnflächen konvex sind. Strahlungsgeometrisch ergibt sich, dass jeder unter einem bestimmten Winkel geneigt zur Systemachse durch die Eingangsstirnfläche in diese Zylinderlinse einfallende Strahl zur Systemachse hin und somit zum Randbereich der ebenfalls konvexen Ausgangsstirnfläche gebrochen wird und kurz nach dem dortigen Austreten durch einen Brennpunkt verläuft. In diesem Brennpunktsabstand hinter der rückwärtigen konvexen Stirnfläche ist alternative zur vorliegenden Erfindung ein Detektor mit ringförmiger aktiver Zone angeordnet. Einem bestimmten Abstand vom Rand der Ausgangsstirnfläche, dem Durchmesser der ringförmigen Detektorzone entsprechend, ist ein bestimmter Einfallswinkel in die Eingangsstirnfläche zugeordnet. Dieser Einfallswinkel ist für einen bestimmten Detektorradius um so stärker gegenüber der Systemlängsachse geneigt, die Sensorcharakteristik weist also einen desto größeren Kegelwinkel auf, je größer der Brechungsindex des Zylindermaterials gegenüber Luft ist. Dieser Index beträgt bekanntlich bei optischem Glas etwa 1,5, bei Silizium etwa 3,5 und bei Germanium etwa 4,0. Der Detektor reagiert also darauf, dass ein Heißpunkt in den hohlkegelförmigen Sensorstrahlengang mit seinem durch die Geometrie und das Material der Zylinderlinse bestimmten Kegel-Öffnungswinkel eintritt.

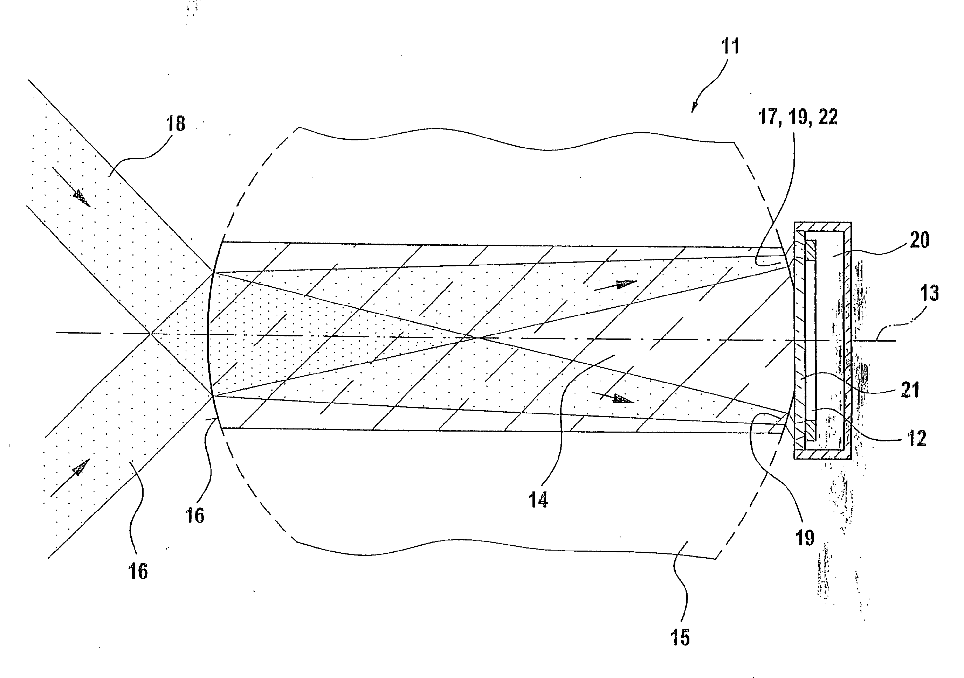

Weitere Merkmale und Vorteile der erfindungsgemäßen Lösung sowie zusätzliche Weiterbildungen ergeben sich aus den weiteren Ansprüchen und aus nachstehender Beschreibung eines in der Zeichnung unter Beschränkung auf das wesentliche stark abstrahiert und nicht maßstabsgerecht skizzierten bevorzugten Realisierungsbeispiels für den erfindungsgemäßen Annäherungssensor. Die einzige Figur der Zeichnung zeigt im Axial-Längsschnitt den Strahlengang durch eine zylinderförmige positive Linse, hinter welcher in der Bildfokusebene das eigentliche Detektorelement angeordnet ist.

Der in der Zeichnung skizzierte thermooptische Annäherungssensor 11 besteht im wesentlichen aus einem - in Alternative zum scheibenförmigen Detektorelement gemäß vorliegender Erfindung - ringförmigen Detektorelement 12, das koaxial zur Systemachse 13 hinter einer langen Zylinderlinse 14 aus Silizium oder Germanium gehaltert ist. Diese Zylinderlinse 14 kann man sich aus einer dicken positiven (also beidseitig konvexen) Linsenform 15 koaxial zur Systemachse 13 herausgeschnitten denken. Bei der Zylinderlinse 14 liegt deshalb einer konvexen Eingangsstirnfläche 16 eine ebenfalls konvexe (nicht unbedingt gleiche Krümmung aufweisende) Ausgangsstirnfläche 17 axial gegenüber.

Ein paralleles Strahlenbündel 18, das unter einer bestimmten Neigung gegenüber der Systemachse 13 in die konvexe Eingangsstirnfläche 16 eintritt, wird aufgrund der strahlengeometrischen Gegebenheiten wie skizziert zur Systemachse 13 im dichteren Material hin gebrochen und auf einen vom Einfallswinkel abhängigen kleinen randnahen Austrittsbereich in der ebenfalls konvexen Ausgangsstirnfläche 17 konzentriert. Der Fokus liegt jenseits der Ausgangsstirnfläche 17. In diesem Fokus ist das Detektorelement 12 in einem Schutzgehäuse 19 hinter einem thermischen Fenster 20 angeordnet. Da das Detektorelement 12 nur den Randbereich entsprechend einem bestimmten Eintrittswinkel erfassen soll, ist er entweder - alternativ zur vorliegenden Erfindung - ringscheibenförmig mit entsprechendem Durchmesser und Ringbreite ausgebildet; oder ein erfindungsgemäß scheibenförmiger Detektor ist zentral abgedeckt, um nur jene Ringzone ansprechen zu lassen. Dabei ist zu berücksichtigen, dass diese planparallele Scheibe des Fensters 20 brechungsbedingt auf dem Weg zum Fokus zu einem abermaligen Versatz des Strahlenganges führt, wie es aus der geometrischen Optik als Brechungserscheinung beim Durchtritt durch einen Quader bekannt ist.

Um für die Positionierung des Detektorelementes 12 den geringen Fokusabstand hinter der Zylinderlinse 14 einhalten zu können, ist deren konvexe Ausgangsstirnfläche 17 im Zentrum quer zur Systemachse 13 plangeschliffen, um hier das Schutzgehäuse 19 mit seinem Fenster 20 zu befestigen. Die Schlifffläche ist vorzugsweise mattiert oder gelackt, um nur den erwähnten Ringbereich des Detektorelementes 12 bestrahlen lassen zu können. Von der konvexen Ausgangsstirnfläche 17 bleibt deshalb für den Strahlendurchgang nur eine schmale konzentrische Ringzone 22, längs derer der Austrittsbereich 19 sich um die Systemachse 13 herum verlagert, wenn der Eingangsstrahl 18 unter Beibehaltung der Neigung um die Systemachse 13 verdreht wird, wie in der Zeichnung für zwei isoliert herausgegriffene Eingangswinkel skizziert. Die hohlkegelwandförmige Empfindlichkeitscharakteristik (dargestellt durch die Strahlenbündel 18) führt also über die ausgangsseitige Ringzone 22 zur Abbildung der einzelnen Einfallsstrahlen auf das in der Bildfokusebene des Strahlenganges gelegene ringförmige Detektorelement 12. Diese ringförmige Abbildung geht mit einem desto steileren Einfallswinkel der Strahlen 18 gegenüber der Systemachse 13 einher, je größer der Brechungsindex des Materials ist, aus dem die Zylinderlinse 14 besteht. Vorzugsweise wird hierfür deshalb Germanium, jedenfalls Silizium eingesetzt.

Wie sich aus dem Strahlendiagramm und alternativ zur vorliegenden Erfindung dem ringförmig ansprechenden Detektorelement 12 ergibt, ist dieser Annäherungssensor 11 in Richtung seiner Systemachse 13 voraus unempfindlich; er spricht erst an, wenn sich ein thermisch strahlendes Objekt (hier insbesondere der abzuwehrende Angreifer) in den geneigten, hohlkegelförmigen Strahlengang eintritt.

Damit ist erfindungsgemäß ein Annäherungssensor 11 für den radial wirkenden Gefechtskopf einer Abwehrgranate geschaffen, die einem angreifenden Projektil vom zu schützenden Objekt aus entgegengefeuert wird, um die Funktionalität des Angreifers zu stören oder sogar zu zerstören. Dieser Annäherungssensor 11 spricht noch nicht darauf an, dass der von der Granate abzuwehrende Gegner in deren Flugrichtung voraus erscheint; vielmehr soll der Annäherungssensor erst dann ansprechen, wenn der abzuwehrende Gegner in einem wirkoptimalen Abstand schräg voraus erfasst wird. Eine solche hohlkegelwandungsförmige Ansprechcharakteristik ergibt sich, wenn ein - alternativ zum scheibenförmigen Detektorelement gemäß vorliegender Erfindung - ringförmiges Detektorelement 12 in der Bildfokusebene hinter einer positiven Zylinderlinse 14 angeordnet ist.

## Patentansprüche

1. Annäherungssensor (11), insbesondere für die Zündauslösung des Gefechtskopfes einer Abwehrgranate gegen ein anfliegendes Projektil, mit einer hohlkegelförmigen Ansprechcharakteristik (18), welcher eine beidseitig konvexe (15; 16, 17) Zylinderlinse (14) vor einem koaxial zu ihrer Systemachse (13) angeordneten Detektorelement (12) umfasst,
**dadurch gekennzeichnet,**
**dass** das Detektorelement (12) scheibenförmig ausgebildet ist und die konvexe Ausgangsstirnfläche (17) der Zylinderlinse (14) im Zentrum quer zur Systemachse (13) planiert ist, wobei diese planierte Fläche derart präpariert ist, dass nur eine schmale, konzentrisch um die planierte Fläche liegende Ringzone (22) der Ausgangsstirnfläche (17) strahlendurchgängig ist, so dass nur ein äußerer Ringbereich des scheibenförmigen Detektorelements (12) bestrahlt werden kann.

2. Annäherungssensor nach Anspruch 1,
wobei die planierte Fläche mattiert oder gelackt ist.

3. Annäherungssensor nach Anspruch 1 oder 2,
wobei die Zylinderlinse (14) aus einem Infrarotstrahlung leitenden Material mit hohem Brechungsindex gegenüber Luft, vorzugsweise Germanium oder Silizium, besteht.

4. Annäherungssensor nach einem der Ansprüche 1 bis 3,
wobei das Detektorelement (12) in einem Schutzgehäuse (20) hinter einem Fenster (21) angeordnet ist.

## Claims

1. Proximity sensor (11), in particular for the initiation of the warhead of a defence artillery shell against an approaching projectile, having a hollow conical response characteristic (18), which comprises a cylindrical lens (14), which is convex (15; 16, 17) on both sides, in front of a detector element (12) which is arranged coaxially with respect to the system axis (13) of the cylindrical lens (14),
**characterized**
**in that** the detector element (12) is in the form of a disc, and the convex output end surface (17) of the cylindrical lens (14) is planarized transversely with respect to the system axis (13) at the centre, with this planarized surface being prepared such that beams can pass through only a narrow annular zone (22), which is located concentrically around the planarized surface, of the output end surface (17), such that only an outer annular area of the detector element (12) which is in the form of a disc can be illuminated.

2. Proximity sensor according to Claim 1,
wherein the planarized surface has a matt or lacquered finish.

3. Proximity sensor according to Claim 1 or 2,
wherein the cylindrical lens (14) is composed of a material through which infrared radiation can pass and which has a high refractive index in comparison to air, preferably germanium or silicon.

4. Proximity sensor according to one of Claims 1 to 3,
wherein the detector element (12) is arranged in a protective housing (20) behind a window (21).

## Revendications

1. Détecteur d'approche (11), en particulier pour le déclenchement de l'allumage de la tête balistique d'une grenade de défense contre un projectile qui s'approche,
et présentant une caractéristique de réponse (18) en forme de cône creux qui comprend une lentille cylindrique (14) convexe sur ses deux faces (15; 16, 17) placée devant un élément de détection (12) disposé coaxialement par rapport à l'axe (13) du système, **caractérisé en ce que**
l'élément de détection (12) est configuré en disque et le centre de la surface frontale convexe de sortie (17) de la lentille cylindrique (14) est planée transversalement par rapport à l'axe (13) du système, cette surface planée étant préparée de manière à ce que seule une étroite zone annulaire (22) de la surface frontale de sortie (17) située concentriquement autour de la surface planée soit transparente vis-à-vis du rayonnement, de sorte que seule une partie annulaire extérieure de l'élément de détection (12) en forme de disque puisse être irradiée.

2. Détecteur d'approche selon la revendication 1, dans lequel la surface planée est matée ou vernie.

3. Détecteur d'approche selon les revendications 1 ou 2, dans lequel la lentille cylindrique (14) est constituée d'un matériau conduisant le rayonnement infrarouge et à haut indice de réfraction vis-à-vis de l'air, de préférence le germanium ou le silicium.

4. Détecteur d'approche selon l'une des revendications 1 à 3, dans lequel l'élément de détection (12) est disposé dans un boîtier de protection (20) derrière une fenêtre (21).
